# EUROPEAN PATENT SPECIFICATION

(11) **EP 2 638 784 B1**
(45) Date of publication and mention of the grant of the patent: **06.08.2014**
(21) Application number: 11797339.6
(22) Date of filing: 11.11.2011
(51) Int. Cl.: H05B 37/02

(54) **ELECTRONIC DISPLAY DEVICE**
ELEKTRONISCHE ANZEIGEVORRICHTUNG
DISPOSITIF D'AFFICHAGE ÉLECTRONIQUE

(30) Priority: 11.11.2010 GB 201019077
(43) Date of publication of application: 18.09.2013
(73) Proprietor: Benmore Ventures Limited, Road Town, Tortola (VG)
(72) Inventor: GRIFFITHS, Bryn, Hong Kong (CN); DUNCAN, Jon, Middlesex TW3 2LU (GB)
(74) Representative: Powell, Stephen David
(86) International application number: PCT/GB2011/052203
(87) International publication number: WO 2012/063079

(56) References cited:
- US-A- 3 806 919
- US-A- 4 359 669

## Description

The present invention relates to an electronic display device and in particular to a device for producing a display in response to an acoustic signal, e.g. in the manner of a spectrum-analyser device. The invention also relates to a method of operating such a device.

A known sound-responsive device, which has been incorporated in a shirt for example, has an electroluminescent display. The device has a circuit which comprises a microphone, and a microphone amplifier. The level of the signal output from this section may be controlled by providing a potentiometer which may vary the gain of the amplifier circuit. This is provided to allow manual adjustment so the resulting display is not all constantly on (over-sensitive) or mostly off (insensitive).

The circuit further comprises a level comparator section which receives its signal directly from the microphone amplifier. This is commonly a dedicated IC with 5 comparator outputs, or a circuit built around a collection of standard comparators. As the incoming signal increases, each output is switched on in a ladder fashion. Where a dedicated IC is used, such as the KA2284, the level steps are fixed at -10dB, -5dB, 0dB, +3dB and +6dB. This IC is designed for VU meters for audio level indication. There are many variations on comparator based VU meter circuits.

The comparator outputs are used to switch on an inverter circuit section which generates the high voltage and frequency required to excite the phosphor in an electroluminescent display, and also to switch in different EL sections. The inverter is commonly a transformer based inverter with a tapped primary and a large number of winding on the secondary, with feedback. The first comparator level output is used to activate this oscillator such that it is not running when the audio threshold is too low. This saves power for battery powered applications.

The above described circuit has a number of disadvantages:
1. The circuit must be manually adjusted to provide a resulting display of audio level which is within the range of the display. Where audio levels are variable, manual re-adjustment must be made each time to bring the range of the display into an acceptable area. The range of operation is very narrow and the circuit can go out of range very easily and often. In an environment where music is a primary entertainment source such circuits are almost constantly out of range and in this respect such circuits are ineffective.
2. Adjusting the level by changing the base current into a one-transistor amplifier changes the DC operating current of the circuit, the frequency response of this amplifier and the DC operating point, and therefore any attempt to have the transistor operate controllably is lost by the re-adjustments being made to this circuit in an attempt to change the gain of this circuit. This also causes large offset voltage shifts to occur at the circuit output which directly and instantly affect the final display. Momentary re-settling of the circuit follows any re-adjustment by this method. Hence during any re-adjustment by this method the circuit cannot perform its intended function.
3. The KA2284 IC, commonly used, has a high current draw (up to 15mA) and therefore reduces battery life since it is running constantly.
4. The circuit must be manually switched off to save power. If left on then battery drain may be greater than desired and cause the batteries to become exhausted prematurely. This may occur within 24 hours or less running from 4* AAA type batteries, even when the circuit is not creating any useful display.
5. The KA2284 has fixed dB levels. These cannot be changed. Implementing the alternative with a comparator based circuit allows flexibility in the design but utilises a greater number of components. Commonly the maximum number of comparators available in one IC is four, so to have five stepped levels a minimum of two ICs must be used, which may also leave some extra comparators unused. Some circuits have been observed as ignoring this option and just using the four available comparators with one IC, but this may reduce the effectiveness of the display as it reduces its resolution.

US4,359,669 discloses lamp modulating circuitry for flashing lamps in response to music.

Aspects of the present invention seek to overcome, or at least reduce, one or more of the above disadvantages.

According to a first aspect of the present invention, there is provided a method of producing a display in response to incoming acoustic signals comprising feeding the output of a sound transducer to control a circuit for controlling the display in response to changes in the output, detecting the average amplitude level of the output of the sound transducer automatically and adjusting the power supplied to the sound transducer to compensate for variations in amplitude of the incoming sounds.

Preferably, the power supplied to the sound transducer is effected by a pulse width modulation technique, the duty cycle of which is varied in response to an average sound signal, averaged over a predetermined time period (e.g. two seconds). A plurality of threshold sound levels may be set, with a corresponding percentage change in the duty cycle being effected in each case.

The above methods ensure that a suitable display output is maintained throughout a wide range of incoming acoustic signal levels.

Preferably, the method further comprises shutting down the control circuit if no signal is detected for a period of time. This enables power to be saved when there is no display; this is important for battery-powered devices. After shutting down, a regular check is undertaken to see if there is a signal and, if there is, the circuit is set into operation.

According to a second aspect of the present invention, there is provided a display device comprising a display member having one or more display segments which are arranged to produce different display effects in response to differing sound levels, a sound transducer, and control circuitry arranged (i) to control the display segments in response to incoming sound signals, and (ii) to detect an average sound signal and to adjust the power supplied to the sound transducer in response thereto.

The control circuitry preferably includes a microcontroller. The microcontroller is preferably configured to control the power supply to the sound transducer using pulse width modulation. It may be configured to set a plurality of levels and, when the average signal level is above or below the desired average, to effect a corresponding percentage change in the duty cycle of the pulse width modulation.

In a preferred device, the display segments have the appearance of a spectrum analyser. The display segments are preferably electroluminescent.

The segments may be irregularly-shaped stepped segments arranged one above the other but having the appearance of a plurality of columns. This enables a relatively small number of segments to imitate the plurality of adjacent columns of a spectrum-analyser or graphic equaliser.

The device is preferably bottle-shaped, and the display segments resemble a label on the side of the bottle.

The sound transducer is preferably an electret condenser microphone.

A preferred embodiment of the present invention will now be described, by way of example only, with reference to the accompanying drawings, of which:
Figure 1 is a front view of a device in accordance with an embodiment of the present invention,
Figure 2 is a diagram of a circuit of the device of Fig 1; and

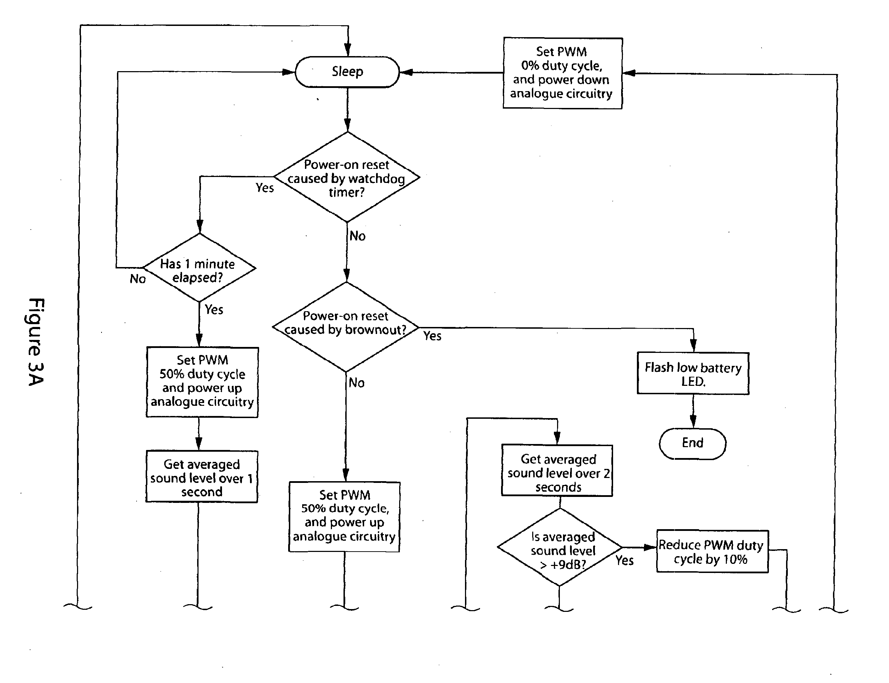

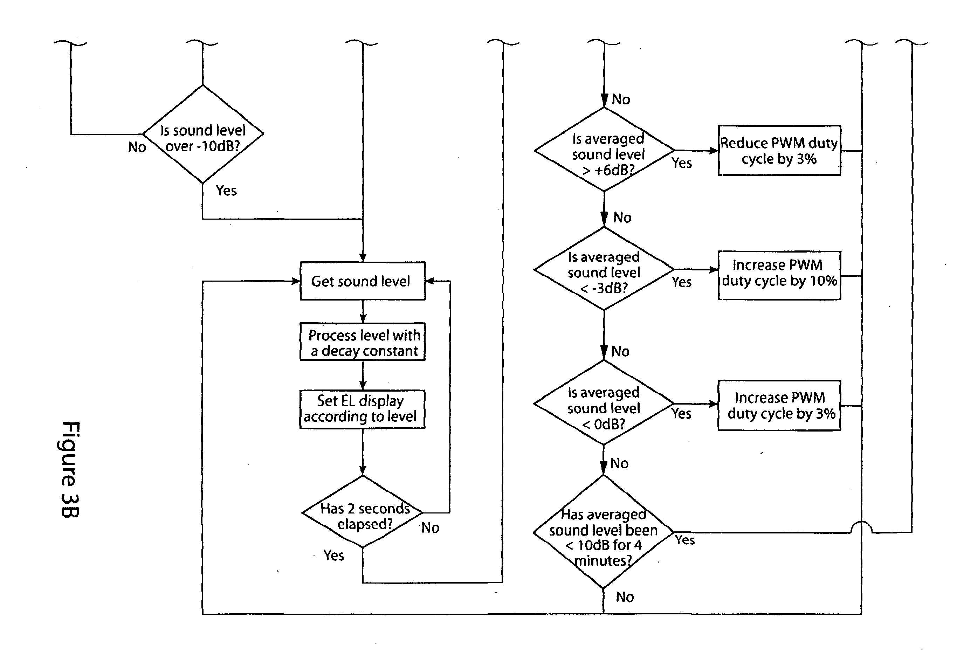

Figures 3A and 3B together form a flow diagram explaining the operation of the circuit of Figure 2.

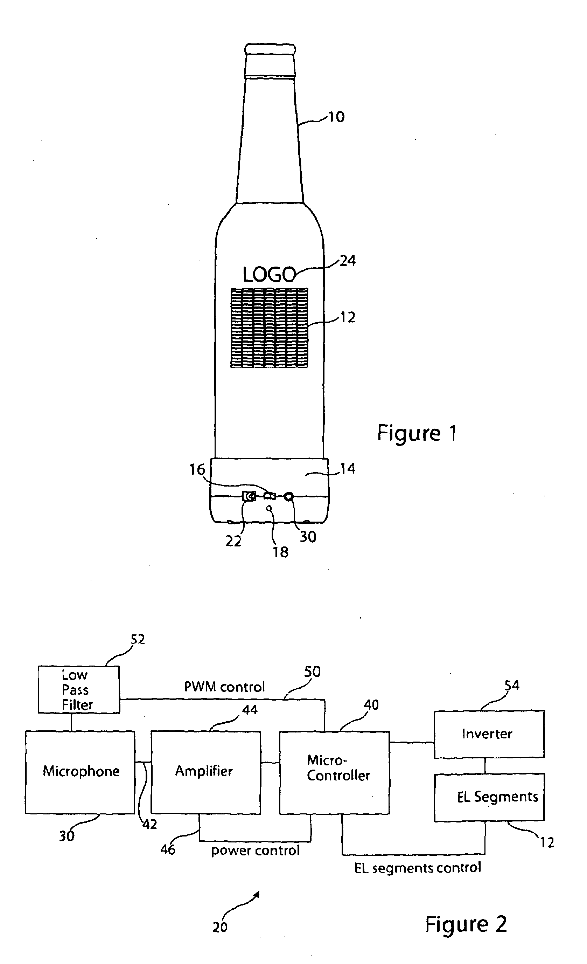

Referring to the drawings, Fig1 is a front view of a bottle-shaped display device 10 of plastics material with an electroluminescent display device 12 having the appearance of a label on the bottle. The device takes the form of what is known in the drinks industry as a bottle 'glorifier'.

Bottle glorifiers highlight empty dummy bottles of a brand in various ways and are used for promotional purposes usually behind the bar for display purposes to attract attention and influence buyer behaviour/ perceptions. The electroluminescent display device 12 is of the type disclosed in patent application WO2010/055312.

The member 10 incorporates a plinth 14 which accommodates a control circuit 20 and a power supply for the device 12. Although plinth 14 has the appearance of being separate from the bottle, it is preferably integral therewith. The construction of the device 10 is such that the label on the side of the bottle is connected via wires that run down the inside surface of the bottle to the control plinth 14 below as disclosed in European Patent Application 1636111A.

The plinth 14 incorporates a power supply switch 16, a low power indicating light 18 and a power socket 22 and a microphone 30.

The device 12 is controlled by a circuit 20 which, in response to incoming sounds, in particular music, detected by the microphone 30, actuates display device 12 to produce a display which resembles that of a spectrum-analyser or graphic equaliser. The conversion of incoming sound to the display is controlled by a microcontroller in the form of a programmed chip 40, Figure 2.

Figure 2 shows an example of a control circuit 20 including an electret condenser microphone 30. Microphone 30 supplies a signal 42 via amplifier 44 to a circuit part in the form of a microcontroller 40. Line 46 is a separate line for supplying power to the amplifier. In conventional circuits, the output of the microphone is regarded as a substantially uncontrollable signal, the level of which is altered within subsequent additional circuitry. On the contrary, in the present circuit, the voltage fed to the electret condenser microphone 30 is changed, whilst normally keeping any series resistance fixed, and hence, in effect, changing the power available to the microphone on line 50. In this way, the corresponding sensitivity level of the microphone can be altered over a large dynamic range with respect to a fixed incoming acoustic level. This makes it possible to change the level of signal entering circuit 20 from the microphone 30 in a different way.

A PWM signal 50, generated either digitally or from analogue circuitry, is converted into a DC voltage by using a basic low pass 6dB per octave passive filter 52, although other filter types could also be employed. By changing the duty cycle of the pulse width modulation, the power supplied to the microphone is changed.

The fundamental frequency of the PWM is conveniently chosen to be above the audio range of interest so that simple passive filtering can be used to reduce any PWM superimposed on the microphone signal to a level which is not significant for the application.

The main area of interest of audio signal in this particular application is in the low frequency area below 500Hz, as the circuit is required to respond to bass and rhythm beats of music which mostly occur below 500Hz. A PWM frequency of 4kHz is suitable for this application.

The display on the device 12 has the appearance of a plurality of columns, e.g. seven, of varying height. In fact the electroluminescent phosphor is arranged in a plurality of, e.g. six, irregularly-shaped stepped segments arranged one above the other. The segment corresponding to a first channel, representing low signal levels, is arranged at the bottom of the label. Successive segments corresponding to second to fifth channels representing increasingly higher signal levels are arranged above the first segment. The sixth segment completes the illumination of substantially the entire label to resemble the effects of a fully-saturated signal.

It has been found that the illusion of a graphic equaliser / spectrum analyser using this stepped phosphor approach has more visual impact than directly linking individual phosphor sections to specific audio frequencies e.g. bass, treble.

The microphone current, and hence the sensitivity of the microphone 30, is controlled by applying a PWM (pulse width modulated) signal to the microphone via a low pass filter 52. The frequency of the PWM signal is kept above the maximum desired audio frequency and the low pass filter ensures that the PWM signal is converted substantially into a DC voltage. Therefore, by varying the PWM signal from between 100% to 10% duty (for example) the DC voltage to the microphone is altered and hence the sensitivity of the microphone can be controlled. This allows the microphone to become more capable of handling high levels of sound pressure level and also allows maximum sensitivity when required. Any PWM signal superimposed on the audio signal is reduced by the filtering to a level which is much lower than the amplitude of any desired audio signal at maximum sensitivity. The implementation of deliberate variation of this PWM signal is further described below. The variation in PWM is used to control the level adjustment of the circuit 20. By implementing a PWM level control the frequency response of the microphone is almost entirely unaffected across the range of interest.

One of the main features of the device is to have the EL display segments 12 representing a consistent dynamic sound level even though the average sound level may vary gradually depending on the particular environment. To implement this automatic gain control (AGC) feature, the microcontroller (which is conveniently a Microchip PIC 16F616) is configured to generate a variable duty cycle pulse width modulation (PWM) signal which is used indirectly to adjust the gain of the microphone sound level. The microcontroller has a dedicated timer, TMR2 and associated logic configured by the CCP1CON and T2CON registers which is used to generate the PWM signal. The firmware code sets the CCPR1L register to adjust the duty cycle between 0 and 100%.

The PR2 register is set such that a 4 kHz PWM frequency is generated.

Once the PWM generation has been established, sound level readings may subsequently be acquired. The sound level signal from the microphone is fed via amplifier 44 into the microcontroller's analogue to digital converter (ADC). This signal is essentially a raw alternating current (AC) signal. A routine in the code finds the peak to peak average value for 256 samples on ADC channel AN3. The ADCON1 register is configured for the quickest conversion time. The ADCON0 register is configured for an ADC voltage reference set to Vdd, and with a right justified data conversion format. An additional routine has been devised to simulate a fast attack and a slower decay typical with most VU meters. It is the value processed by the aforementioned functions that are used to display the level to the EL display segments. A routine in the code simulates a bar display driver. Digital output ports are used to indirectly drive each of the EL display segments using negative logic, via inverter 54.

Every two seconds, a further averaged sound level (averaged over the two seconds) is used to adjust the PWM duty cycle. For sound levels greater than +9dB (as an internal reference), the PWM duty cycle is reduced by 10%; greater than +6dB, the PWM cycle is reduced by 3%; less than -3dB, the PWM duty cycle is increased by 10%; and less than 0dB the PWM duty cycle is increased by 3%.

The amplifier 44 is allowed a fixed DC operating point which is optimised for this application. No variation on this operating point is ever necessary as level control is implemented with the PWM signal as described above.

The amplified audio signal is passed to an A to D converter. This can be implemented within the microcontroller 40 such as a microchip PIC. The relative audio levels can be chosen as desired from the internal digital signal and some port outputs used to emulate comparator outputs. In this fashion, the number of levels which can be used to control the EL segments is only limited by the number of available port outputs and the resolution of the A to D converter.

The total current draw of the above configuration can be 2mA or lower when idling. This is a significant reduction in the 15mA noted above. In a similar fashion, the inverter circuit is activated only when required to retain this power saving measure.

Other features may also now be easily implemented, for example by using a built-in brown-out feature it is possible to implement a low-battery indication. This section only applies when the device is powered from batteries although the same logic is executed if the device is configured for both battery operation and mains operation. The microcontroller is reset when the device's battery voltage drops below the operating limits. The brown out register (BOR) bit is checked during initialization to detect whether the microcontroller was reset due to the batteries being too low for reliable device operation. In such a case the low battery LED is turned on for 35ms every 2 seconds thus not drawing much power. One of the digital output ports is used to drive the low battery indicator LED using positive logic. A digital input port is used to detect whether the device is currently mains or battery powered.

Further, it is now possible to have audio signal monitoring. Where the audio signal being sensed by the microphone has increased and this has placed or will place the display outside, or partially outside, the desired display range, the PWM may be adjusted one way or the other to bring the display back into range, as described above. This therefore eliminates the need for any manual intervention in this matter. The rate of change in the PWM signal may also be controlled to allow for a smooth slow adjustment or a more rapid adjustment, as required. This allows the circuit to be used in areas where the audio level is reasonably unpredictable, such as in bars and nightclubs, as the circuit may be physically positioned in the most desirable position rather than being limited to a position which is necessary for the circuit to function.

Where no signal is detected for a period of time it now becomes possible to allow a circuit shutdown to save power. The microphone and the microphone amplifier can both be shut off saving further power. A drain current of 10µA is achievable which could extend battery life for days, if not weeks or longer. This eliminates the need to have someone remember to switch the circuit off as this drain current is reasonably insignificant. One of the digital output ports is used to also disable the analogue hardware power when the PIC is sleeping.

Where the unit is shutdown but operation is required, a further feature may be implemented which regularly wakes up the circuit for a short period of time, "listens" for activity, and if there is none, shuts down again. This feature therefore means that the circuit becomes automatic as it will wake itself fully to operate when sound levels exist in the area once more.

The microcontroller 40, when idle, is in its low power sleep state. The microcontroller has the ability to be taken out of its sleep state by the internal watch dog timer which times out every 2.3 seconds. The time out (TO) bit is checked during initialization to detect this periodic wakeup event. Since the microcontroller's random access memory (RAM) is preserved during a reset, a variable is used to effectively divide this period into a longer period of 1 minute. As a result of this, every 1 minute the device checks the level of ambient sound, while consuming low average power. If there is sufficient ambient sound the circuit 20 is set into its working operation state.

Conversely, when there is little or no ambient sound for a continuous period of 4 minutes the device is then taken back into its sleep state. This check is performed only when the device is in its working operation state.

An advantage of the plastics material of the device 10 is that it is easier to transport and easier to have the electronic components attached thereto. The use of an actual glass bottle would involve the risk of breakage. Other material can be used for device 10, if desired.

In preferred embodiments, the device has the appearance of incorporating an animated label that reacts to the bass line in a music track, reacting in time to the music. The circuit 20 is able to recalibrate itself as the volume level varies i.e. it is able to adjust to the bass level at different volume levels. This self-calibration means that no user intervention is required when sound and music levels change.

The advantageous effects of the device are achieved using a circuit that can automatically change the power to the device's audio detecting microphone, thereby directly changing the sensitivity of the microphone, thereby eliminating or reducing the need to change the gain or attenuation of the other circuitry. In this way the device is able to average out broad ranges of sound levels so the EL level representation of the sound level is re-scaled, thereby keeping the audio level representation within the available display limits of the EL display. If that average sound level is above a present threshold then the power to the microphone is reduced, thus reducing the output level from the microphone to the rest of the control circuitry. Conversely if the averaged sound level is below a preset threshold, then the device increases the power to the microphone, thereby increasing the level from the microphone to the rest of the control circuitry. This loop is constantly updated to force the average output level from the microphone to be within the range necessary to create a correspondingly balanced response around a preset point on the EL display.

If such averaging out of the sound level were not to take place in an application where the circuit is being used to control a piece of EL, or other display type, from an acoustic source (as in the case of sound responsive EL that is commonly used on T-shirt displays), then as the volume level of the input music varies, the EL can easily be either constantly all on (over-sensitive) or mostly all off (insensitive). Clearly as the sound levels in different bars and clubs can vary dramatically, this renders such circuit unsuitable because they are not flexible enough to cope, without constant intervention, with the varied acoustic levels present across different bar/club environments.

When the voltage and current being fed to an electret condenser microphone are kept low it becomes possible to have the microphone able to receive higher acoustic signal levels than might otherwise be possible if the microphone power was constant, without having an overloaded or distorted output signal from the microphone.

Conversely, by supplying a higher voltage and current, it becomes possible to increase the useful output signal level without having to increase the gain of an associated amplifier which could result in also amplifying unwanted noise. This method, therefore also allows an increase in the signal to noise ratio without changing the gain of any associated amplifier. This approach of using a control voltage to directly supply the power to the microphone still allows a simple closed loop system to be possible which enables the level from the microphone to be controlled easily as part of an automatic level control circuit.

The plinth 14 may be omitted and the power supply and/or other circuitry may be located inside device 10 behind the display device 12. In this arrangement, a self-contained circuit, a power source and EL device are positioned in place of a label.

In a modification of the device 10, an actual glass bottle is used with holes being cut in the base and behind the label to accommodate the writing and electronic components. An alternative is to have a glass moulding configured to already have holes which would allow connection wires to be passed through to the interior of the bottle.

If desired a more precise graphic equaliser effect can be provided, so that the animated display on device 12 actually represents different frequency bands. This involves more complex circuitry. It is also then dependent on the real audio frequency spectrum reaching the microphone 30.

The animated label device 12 need not resemble a graphic equaliser. It can be a logo, text or even a picture or image that has different elements animated in time to music. It can have a variety of shapes. It may not react to music, at least not all of the time. Rather it can be animated to a series of pre- programmed instructions. Such an approach would be useful for highlighting a series of different messages that could for example scroll across a single bottle or a series of bottles that are linked together. The animation could also be triggered in a variety of other ways e.g. via vibration, wirelessly, motion, changes in light levels or via manual switching.

A separate electroluminescent display device 24 may provide a static display of a logo or other textual or pictorial matter.

Instead of electroluminescent segments, other display elements may be used, e.g. LED segments.

The microcontroller 40 may be replaced by a dedicated circuit, a specially made integrated circuit, or a collection of components interconnected to perform the required functions.

The unit can run from mains or battery power and automatically switches from batteries to mains input when it detects a power cable has been plugged into socket 22 of the unit. When running from batteries, low battery indicator light 18 begins flashing when battery power reaches a certain low level threshold. Light 18 may function as both the low battery indicator light and to indicate normal power.

As previously mentioned, the above-described components can be attached to actual drinks bottles rather than dummy glorifiers. An electroluminescent label can replace a normal paper label on actual bottles in the same way as the glorifier variant. Adhesively backed wires then run down the outside of the bottle from the electroluminescent label and wrap around the base of the bottle, connecting to an adhesive flat pad that contains conductive strips. This arrangement preferably takes the form of a single construction i.e. an electroluminescent label connected by long wires to a conductive pad with the entire arrangement being stuck as one unit to bottles.

There can be positioned throughout a bar, base units that contain the drive circuitry similar to the plinth 14. On the top surface of the base units are a second set of conductive contacts. These mate to the conductive strips on the base pad of each bottle. When the bottles are placed on the base unit a connection is made and the electroluminescent bottle label is animated. The output signal from the base unit can animate the bottle labels in a variety of ways, such as in time to the bass line of music or through a series of pre-programmed sequences.

In one modification, the base unit has a mechanism for attaching itself to the bottle (e.g. via a rubber ring arrangement). This has the advantage of allowing a connection to be maintained between the bottle and the base unit even when the bottle is picked up, thereby allowing the label to animate when the bottle is poured. Then when the bottle becomes empty, the bartender simply pulls the base unit off the empty bottle base and pushes a fresh full bottle onto the base unit. Such a device is disclosed in patent application GB 0921751.4.

## Claims

1. A method of producing a display in response to incoming acoustic signals comprising feeding the output (42) of a sound transducer (30) to control a circuit (20) for controlling the display (12) in response to changes in the output, detecting the average amplitude level of the output of the sound transducer and **characterised by** automatically adjusting the power supplied to the sound transducer to compensate for variations in amplitude of the incoming sounds.

2. A method according to claim 1, wherein the power (50) supplied to the sound transducer (30) is effected by a pulse width modulation technique, the duty cycle of which is varied in response to an average sound signal, averaged over a predetermined time period.

3. A method according to claim 2, wherein a plurality of threshold sound levels are set, with a corresponding percentage change in the duty cycle of the pulse width modulation being effected in each case.

4. A method according to any preceding claim comprising shutting down the control circuit if no signal is detected for a period of time.

5. A method according to claim 4, wherein, after shutting down, a regular check is undertaken to see if there is a signal and, if there is, the circuit is set into operation.

6. A display device comprising a display member having one or more display segments (12) which are arranged to produce different display effects in response to differing sound levels, a sound transducer (30), and control circuitry (20) arranged to control the display segments (12) in response to incoming sound signals, and **characterised by** the control circuitry being arranged to detect an average sound signal and to adjust the power supplied to the sound transducer in response thereto.

7. A display device according to claim 6, wherein the control circuitry (20) includes a circuit part(40) which is configured to control the power supply to the sound transducer using pulse width modulation.

8. A display device according to claim 7, wherein the circuit part(40) is configured to set a plurality of levels and, when the average signal level is above or below the desired average, to effect a corresponding percentage change in the duty cycle of the pulse width modulation.

9. A display device according to any of claims 6 to 8 wherein the display segments (12) have the appearance of a spectrum analyser.

10. A display device according to any of claims 6 to 9, wherein the segments (12) are irregularly-shaped stepped segments arranged one above the other but having the appearance of a plurality of columns.

11. A display device according to any of claims 6 to 10, wherein the display segments (12) are electroluminescent.

12. A display device according to any of claims 6 to 11, wherein the sound transducer is an electret condenser microphone (30).

13. A display device according to any of claims 6 to 12, wherein the device is bottle-shaped, and the display segments (12) resemble a label on the side of the bottle.

14. A display device according to any of claims 6 to 13, wherein the control circuitry (20, 40) is configured to shut down in absence of sound.

15. A display device according to claim 14, wherein the control circuitry (20, 40) is configured to be set into operation in the presence of sound.

## Patentansprüche

1. Verfahren zum Erzeugen einer Anzeige als Antwort auf eingehende akustische Signale aufweisend die Einspeisung der Ausgabe (42) eines elektroakustischen Wandlers (30) zum Steuern eines Schaltkreises (20) für die Steuerung der Anzeige (12) als Reaktion auf Änderungen der Ausgabe, Detektieren des Mittelwertes des Amplitudenpegels der Ausgabe des Schallwandlers und **gekennzeichnet durch** automatisches Einstellen der dem elektroakustischen Wandler zur Verfügung gestellten Leistung, um Amplitudenschwankungen der eingehenden Töne auszugleichen.

2. Verfahren gemäß Anspruch 1, wobei die Leistung (50), die dem elektroakustischen Wandler zur Verfügung gestellt wird, durch eine Impulsbreiten-Modulationstechnik bewirkt wird, deren Arbeitszyklus variiert in Reaktion auf ein mittleres Tonsignal, gemittelt über eine vorausbestimmte Zeitperiode.

3. Verfahren gemäß Anspruch 2, wobei mehrere Schwellenwerttonpegel eingestellt werden mit Wirkung einer entsprechend prozentualen Änderung in dem Arbeitszyklus der Impulsbreiten-Modulation in jedem Fall.

4. Verfahren gemäß einem der vorangegangenen Ansprüche aufweisend das Abschalten des Steuerschaltkreises falls kein Signal über eine Zeitperiode detektiert wird.

5. Verfahren gemäß Anspruch 4, wobei nach Abschalten ein regelmäßiger Test durchgeführt wird, um zu sehen, ob ein Signal vorhanden ist, und, falls ja, der Schaltkreis in Betrieb gesetzt wird.

6. Eine Anzeigevorrichtung aufweisend ein Anzeigeteil, welches ein oder mehrere Anzeigesegmente (12) besitzt, die angeordnet sind, verschiedene Anzeige-Effekte zu erzeugen in Reaktion auf verschiedenen Tonpegel, einen elektroakustischen Wandler (30), eine Steuerschaltung (20) gestaltet zum Steuern der Anzeigesegmente (12) in Reaktion auf eingehende Tonsignale, und **dadurch gekennzeichnet, dass** die Steuerschaltung zum Detektieren eines mittleren Tonsignals und zum Einstellen der dem elektroakustischen Wandler zur Verfügung gestellten Leistung in Reaktion darauf gestaltet ist.

7. Anzeigevorrichtung gemäß Anspruch 6, wobei die Steuerschaltung (20) einen Schaltungsabschnitt (40) beinhaltet, welcher zum Steuern der dem elektroakustischen Wandler zur Verfügung gestellten Leistung unter Verwendung von Impulsbreiten-Modulation gestaltet ist.

8. Anzeigevorrichtung gemäß Anspruch 7, wobei der Schaltungsabschnitt (40) zum Einstellen mehrerer Pegel gestaltet ist und, sobald der mittlere Signalpegel oberhalb oder unterhalb des gewünschten Mittelwertes ist, eine entsprechende prozentuale Änderung in dem Arbeitszyklus der Impulsbreiten-Modulation bewirkt.

9. Anzeigevorrichtung gemäß einem der Ansprüche 6 bis 8, wobei die Anzeigesegmente (12) das Aussehen eines Spektrum-Analysators haben.

10. Anzeigevorrichtung gemäß einem der Ansprüche 6 bis 9, wobei die Segmente (12) unregelmäßig geformte, gestufte Segmente sind, die eins über dem anderen angeordnet sind aber das Aussehen von einer Vielzahl von Säulen haben.

11. Anzeigevorrichtung gemäß einem der Ansprüche 6 bis 10, wobei die Anzeigesegmente (12) elektrolumineszierend sind.

12. Anzeigevorrichtung gemäß einem der Ansprüche 6 bis 11, wobei der elektroakustische Wandler ein Elektret-Kondensatormikrofon (30) ist.

13. Anzeigevorrichtung gemäß einem der Ansprüche 6 bis 12, wobei die Vorrichtung flaschenförmig ist, und die Anzeigesegmente (12) einem Etikett auf der Seite der Flasche ähneln.

14. Anzeigevorrichtung gemäß einem der Ansprüche 6 bis 13, wobei die Steuerschaltung (20,40) dazu konfiguriert ist, in Abwesenheit eines Tons abzuschalten.

15. Anzeigevorrichtung gemäß Anspruch 14, wobei die Steuerschaltung (20,40) so eingestellt ist, dass sie bei bei Anwesenheit eines Tons in Betrieb gesetzt wird.

## Revendications

1. Procédé de production d'un affichage en réaction à des signaux acoustiques incidents, comportant les étapes consistant à introduire la sortie (42) d'un transducteur (30) de son pour commander un circuit (20) servant à commander l'affichage (12) en réaction à des évolutions de la sortie, à détecter le niveau moyen d'amplitude de la sortie du transducteur de son, et **caractérisé par** un réglage automatique de la puissance fournie au transducteur de son pour compenser des variations de l'amplitude des sons incidents.

2. Procédé selon la revendication 1, la puissance (50) fournie au transducteur (30) de son étant mise en oeuvre par une technique de modulation de largeur d'impulsions, dont le cycle de marche est amené à varier en réaction à un signal sonore moyen, moyenné sur une durée prédéterminée.

3. Procédé selon la revendication 2, une pluralité de niveaux sonores seuils étant spécifiée, une évolution correspondante en pourcentage du cycle de marche de la modulation de largeur d'impulsions étant mise en oeuvre dans chaque cas.

4. Procédé selon l'une quelconque des revendications précédentes, comportant l'étape consistant à mettre hors tension le circuit de commande si aucun signal n'est détecté pendant une certaine durée.

5. Procédé selon la revendication 4, un contrôle régulier étant entrepris après la mise hors tension pour voir s'il existe un signal et, si c'est le cas, le circuit étant mis en fonctionnement.

6. Dispositif d'affichage comportant un élément d'affichage comprenant un ou plusieurs segments (12) d'affichage qui sont agencés pour produire différents effets d'affichage en réaction à des niveaux de son différents, un transducteur (30) de son, et une circuiterie (20) de commande agencée pour commander les segments (12) d'affichage en réaction à des signaux sonores incidents, et **caractérisé en ce que** la circuiterie de commande est agencée pour détecter un signal sonore moyen et pour régler la puissance fournie au transducteur de son en réaction à celui-ci.

7. Dispositif d'affichage selon la revendication 6, la circuiterie de commande (20) comprenant une partie (40) de circuit qui est configurée pour commander l'alimentation électrique du transducteur de son en utilisant une modulation de largeur d'impulsions.

8. Dispositif d'affichage selon la revendication 7, la partie (40) de circuit étant configurée pour spécifier une pluralité de niveaux et, lorsque le niveau moyen de signal est supérieur ou inférieur à la moyenne souhaitée, pour mettre en oeuvre une évolution correspondante en pourcentage du cycle de marche de la modulation de largeur d'impulsions.

9. Dispositif d'affichage selon l'une quelconque des revendications 6 à 8, les segments (12) d'affichage présentant l'aspect d'un analyseur de spectre.

10. Dispositif d'affichage selon l'une quelconque des revendications 6 à 9, les segments (12) étant des segments étagés de forme irrégulière agencés l'un au-dessus de l'autre mais présentant l'aspect d'une pluralité de colonnes.

11. Dispositif d'affichage selon l'une quelconque des revendications 6 à 10, les segments (12) d'affichage étant électroluminescents.

12. Dispositif d'affichage selon l'une quelconque des revendications 6 à 11, le transducteur de son étant un microphone (30) avec condensateur à électret.

13. Dispositif d'affichage selon l'une quelconque des revendications 6 à 12, le dispositif présentant la forme d'une bouteille et les segments (12) d'affichage ressemblant à une étiquette sur le flanc de la bouteille.

14. Dispositif d'affichage selon l'une quelconque des revendications 6 à 13, la circuiterie (20, 40) de commande étant configurée pour se mettre hors tension en l'absence de son.

15. Dispositif d'affichage selon la revendication 14, la circuiterie (20, 40) de commande étant configurée pour être mise en fonctionnement en présence d'un son.
